# EUROPEAN PATENT APPLICATION

(11) **EP 4 614 047 A1**
(43) Date of publication of application: **10.09.2025**
(21) Application number: 24220198.6
(22) Date of filing: 16.12.2024
(51) Int. Cl.: F16L 21/03, F16L 47/08

(54) **PIPE COUPLER**

(30) Priority: 06.03.2024 NL 2037187
(71) Applicant: Wienerberger AG, 1100 Wien (AT)
(72) Inventor: Bannert, Oliver, 1100 Vienna (AT); Wijnker, Christiaan Johannes Nicolaas, 1606 XC Venhuizen (NL); Schouten, Michael Adrianus Jacobus, 1689 WT Zwaag (NL)
(74) Representative: Nederlandsch Octrooibureau

(57) **Abstract**

A coupler comprises a first end for receiving a pipe section and a second end, and a stop edge extending radially inward from an inner circumference of the coupler. The stop edge comprises a rigid portion and a flexible portion adjacent to the rigid portion, the flexible portion forming a receiving surface for a pipe end.

## Description

### FIELD OF THE INVENTION

This relates to couplers, and in particular a coupler for connecting with a pipe end and/or fitting.

### BACKGROUND

Pipes, fittings or/and tubes are commonly used in various fields, including in-house discharge pipes, and underground pipes for drainage systems such as municipal sanitary sewer systems and/or storm sewer systems. To connect pipe sections with a certain tensile strength, there are various conventional techniques including gluing or welding together the pipe sections.

Another method of connection is using a coupler with an opening and a seal on the inside. Such a seal is typically formed of a sealing ring in an interior groove of the coupler. For insertion, a spigot end of the pipe can be lubricated and/or chamfered, and then is inserted into the coupler to form a sealing connection.

To allow for thermal elongation of the piping system, a thermal elongation gap is created manually at the connection of the spigot and coupler, meaning that the spigot needs to be fully pushed in and then be pulled out again a small distance to form the gap. This results in an installation process which takes considerable time, and could result in leakage, for example, if the spigot is pulled out too much.

### SUMMARY OF THE INVENTION

According to a first aspect, a coupler comprises a first end for receiving a pipe section and a second end, and a stop edge extending radially inward from an inner circumference of the coupler. The stop edge comprises a rigid portion and a flexible portion adjacent to the rigid portion, with the flexible portion forming a receiving surface for a pipe end. Such a stop edge is able to provide an effective stop mechanism in the coupler that stops a pipe from further movement when inserting a pipe into the coupler. The flexible portion provides an artificial decoupling at every socket-spigot (coupler-pipe) connection, thus limiting any vibration expansion to help to reduce vibrations and overall noise in the pipe system.

According to an embodiment, the rigid portion comprises a lip extending radially around the inner circumference. Such a lip can extend axially about 0,1-10mm, and extends radially inward in the coupler about 0,1-10 mm. The lip provides a rigid stop element that ensures a pipe in the coupler cannot extend beyond such a point when being inserted into the coupler. In some embodiments, the lip can be interrupted.

According to an embodiment, the flexible portion comprises a plurality of protrusions forming the receiving surface. Optionally, the protrusions extend above the lip with the receiving surface being above or closer to the first end than the lip. If in an interrupted lip, the protrusions could extend through the interruptions. This could be in all or only in some interruptions. Further optionally, the protrusions extend about 2,5-3,5 mm closer to the first end than the lip. The number of protrusions could be 3-30, preferably 5-15, more preferably 5-10. By having protrusions extending above the rigid portions the receiving surface is located above the rigid portions thereby ensuring decoupling of the rigid materials (the pipe and rigid parts of the coupler) in the system. This helps to limit vibrations and reduce noise in the system. Forming the protrusions with a receiving surface which sits above the rigid lip also helps to simplify the connection and assembly of the pipe and coupler. In previous systems, it was necessary to assemble the pipe and coupler with an expansion gap, meaning the pipe needed to be fully inserted and then pulled out a bit to allow for expansion in the system. This was a delicate and slow process that had to be done manually, and which could result in leakage if not done correctly. Instead, using protrusions that extend above the rigid lip eliminates the need for manual assembly with an expansion gap. The protrusions above the rigid lip allow for thermal expansion in the system, eliminating the need for the delicate and less efficient installation process previously used to provide an expansion gap.

According to an embodiment, the receiving surface on each of the plurality of protrusions is at an angle. The angle could be, for example, 0 and 85 degrees from vertical, preferably between 15 and 75 degrees from vertical, more preferably between 35-55 degrees, most preferably about 45 degrees. Such an angle can help to ensure that any pipe, particularly a chamfered pipe, can be easily assembled with coupler.

According to an embodiment, an edge of at least part of the flexible portion aligns with an edge of the rigid portion. This could be the radial inner edges and/or the axial edges. Optionally, the flexible portion includes a flexible lip directly below the interrupted lip. Further optionally, the flexible portion connects to all protrusions, extending below the protrusions and in some cases the lip. Such a configuration provides a stable and strong stop edge that does not interfere with flow through the pipe and coupler but also allows for thermal expansion and decoupling to reduce vibrations and noise within the system.

According to an embodiment, the flexible portion is bonded or moulded to the rigid portion. Such bonding or moulding can ensure that flexible and rigid portions remain together to form a strong stop edge which can also decouple the rigid materials when connected to a pipe, and allow for thermal expansion.

According to an embodiment, the flexible portion comprises a thermoplastic elastomer and/or the rigid portion(s) of the sleeve and stop edge comprise a plastic (e.g., polypropylene) or a metal material. Such materials provide for a strong yet flexible stop edge which can help to reduce vibration and sound transmission.

According to an embodiment, the coupler defines a pipe section insertion direction along a central axis, and the flexible portion extends axially along the insertion direction such that the distance between the first end and the flexible portion at the receiving surface is less than the distance between the first end and the rigid portion. Such a receiving surface provides an effective and noise reducing end stop for an end of a pipe while allowing for thermal expansion within the system.

According to an embodiment, the coupler further comprises a sealing system comprising a sealing lip extending radially from the circumference of the coupler between the stop edge and the first end. Optionally, the sealing system is formed of a flexible material extending around the entire circumference from an inside to an outside of the coupler. Further optionally, the sealing system extends in a non-annular and/or wavy shape around the sleeve. Such a sealing system can enable effective sealing between the pipe and coupler while allowing for smaller insertion and/or extraction forces needed through the wavy shape, thereby providing an easier and more efficient installation or extraction procedure.

According to an embodiment, the flexible portion receiving surface comprises a wavy shape with one or more waves extending around the inner circumference of the coupler. Optionally the wavy shape is substantially constant in the radial direction such that the distance between the receiving surface and the first end of the coupler varies along the inner circumference but not in the radial direction. Further optionally, a bottom side of the flexible portion is bonded or moulded to a top side of the rigid portion. Further optionally, the wavy portion is rotationally symmetric. Forming such a flexible portion with a wavy receiving surface can help to reduce noise and vibrations when a pipe is connected inside the coupler, and further helps to simplify the connection between the pipe and coupler. Similar to what was explained with respect to the protrusions forming a receiving surface, forming a wavy surface as the receiving surface of the stop edge also eliminates the need for an expansion gap. The wavy surface allows for thermal expansion in the system, eliminating the need for the delicate and less efficient installation process previously used to provide an expansion gap.

According to an embodiment, the wavy portion comprises a wave height of 0,1-10 mm, preferably 1-5 mm. Such a height provides for any needed thermal expansion of the pipe system while still ensuring there is a solid connection between the pipe and coupler to allow for smooth and leak-free flow.

According to an embodiment, the coupler defines a pipe section insertion direction along a central axis, and the wave shape extends along the insertion direction such that the distance between the first end and the receiving surface varies along the inner circumference. Such a surface provides an effective and noise reducing end stop receiving surface for an end of a pipe while allowing for thermal expansion within the system.

According to an embodiment, the flexible portion of the stop edge extends from an inner surface of the rigid portion. For example, the flexible portion extends from an inner circumference of a rigid lip. In such an embodiment, the flexible portion can align axially with the rigid lip in parts where protrusions are not located, forming a single lip partially formed of rigid material and partially formed of flexible material. Such a stop edge can provide effective stopping through the rigid part and decoupling through the flexible material in a compact overall package, minimizing the materials needed and weight of the overall coupler.

According to an embodiment, the flexible portion and the rigid portion do not overlap in the radial direction. In such an embodiment, the part immediately inward from coupler inner surface could be radial, with the flexible portion extending only inward from the rigid portion. Such an embodiment results in an effective coupler which will stop a pipe but provide for noise and vibration reduction.

According to an embodiment, the coupler further comprises a sealing system comprising a sealing lip extending radially inward from the inner circumference of the coupler between the stop edge and the first end. Optionally, the sealing system is formed of a flexible material extending around the entire circumference from an inside to an outside of the coupler. Further optionally, the sealing system extends in a non-annular and/or wavy shape around the sleeve. Such a sealing system can enable effective sealing between the pipe and coupler while allowing for smaller insertion and/or extraction forces needed, thereby providing an easier and more efficient installation procedure.

According to a further aspect, an assembly comprises the coupler as previously described, and a pipe with a first end extending inside the coupler and connecting to the flexible portion of the stop edge. Optionally, the assembly further comprises a clamp which clamps around the first side of the coupler and the pipe. Further optionally, the clamp can include one or more edges, teeth and/or lips (e.g., an interrupted lip) to secure around the coupler and/or pipe. Further, such a clamp could help provide additional pressure on sealing system to ensure the seal operates correctly, maintaining a sealing connection between the coupler and pipe. Such an assembly provides a strong connection while reducing vibrations and noise with the flexible portion. The clamp can provide a simple way to allow the connection to bear higher pressure loads with lower risk of separation and/or leakage between the pipe and coupler. Interruptions in the lip can help to reduce the risk that the flexible material gets deformed and/or damaged when applying the clamp.

According to a further aspect, a method of manufacturing a coupler comprises injection moulding a rigid part with a first end for receiving a pipe section, a second end and a stop edge extending radially inward around the inner circumference of the coupler; and moulding flexible material, the flexible material comprising a receiving surface for a pipe end. The rigid part is formed of a substantially rigid material Optionally, the step of moulding further comprises forming the receiving surface as protrusions extending from the flexible material or forming the receiving surface in a wavy pattern. Such a method provides a simple yet effective way of forming a coupler from different materials as one integral coupler. Such a coupler, particularly the receiving surface formed of flexible material, provides a stop edge that results in decoupling and therefore vibration and noise reduction in the overall system. The protrusions and/or wavy shape can also allow for any thermal expansion needed in the system without requiring installation with expansion gaps.

### BRIEF DESCRIPTION OF THE DRAWINGS

The invention will be described further with respect to embodiments shown in the drawings.
FIG. 1A shows a perspective top view of a coupler;
FIG. 1B shows a cross-sectional view of the coupler of FIG. 1A;
FIG. 1C shows a view of the sealing system of the coupler of FIG. 1A;
FIG. 1D shows a close-up cross section of the connection between sealing system and rigid parts of the coupler of FIG. 1A;
FIG. 2A shows a cross-sectional view of a pipe being inserted into a coupler; and
FIG. 2B shows a cross-sectional view of the pipe fully connected to the coupler.
FIG. 3 shows a cross-sectional view of a second embodiment of a coupler;
FIG. 4A shows a top perspective view of a clamp for use with a coupler;
FIG. 4B shows a bottom perspective view of the clamp of FIG. 4A;
FIG. 4C shows the clamp in use with a pipe and coupler;
FIG. 5A shows a cross-sectional view of a further embodiment of a coupler with stop edge;and
FIG. 5B shows a close-up view of a portion of Fig. 5A.

### DESCRIPTION

The following is a description of certain embodiments of the invention, given by way of example only and with reference to the figures. It is also to be understood that the terminology used herein is for the purpose of describing particular aspects only and is not intended to be limiting.

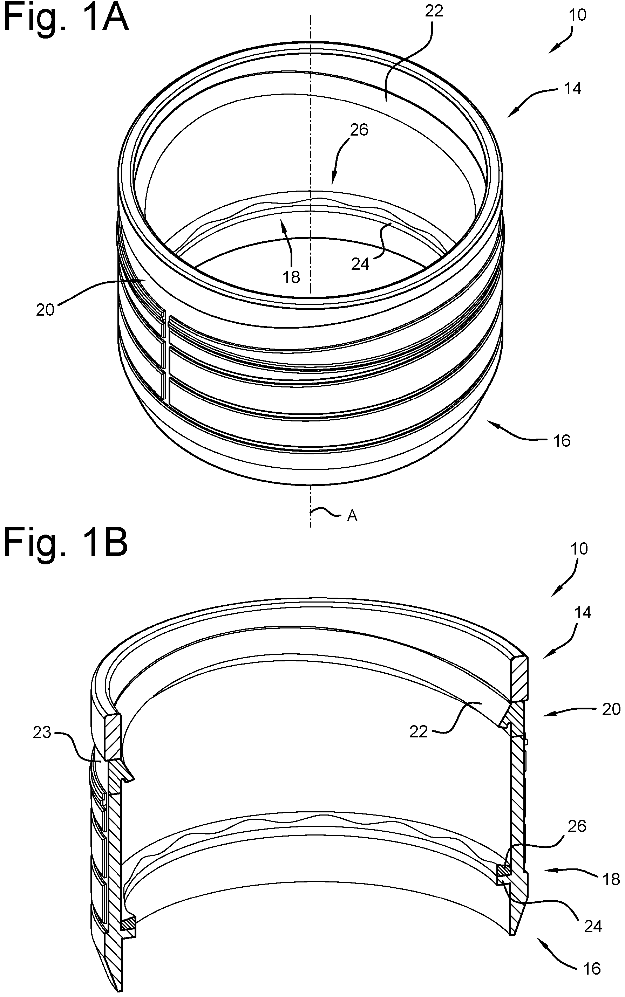

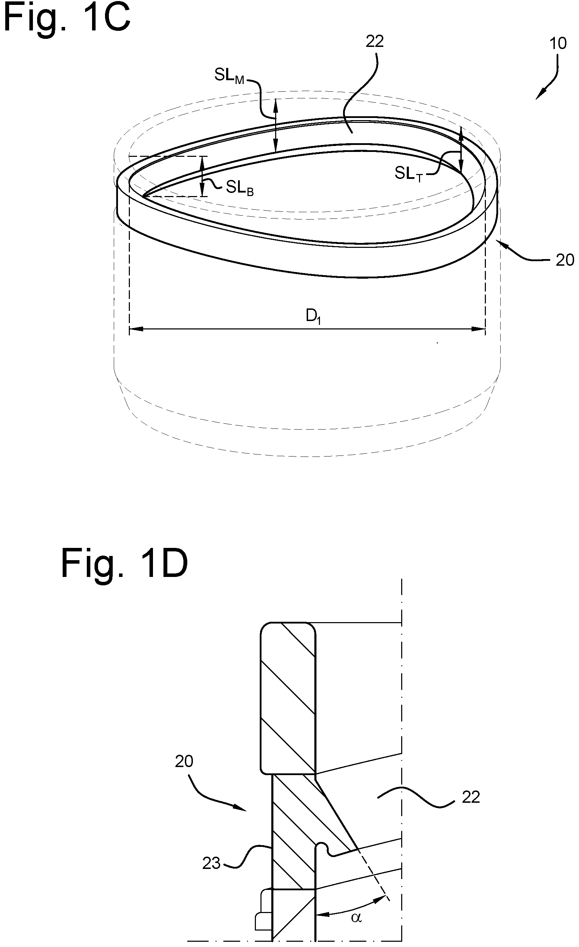

FIG. 1A shows a perspective top view of coupler 10; FIG. 1B shows a cross-sectional view of coupler 10; FIG. 1C shows a view of the sealing system 20 of coupler 10; and FIG. 1D shows a close-up cross section of the connection between sealing system 20 and rigid parts of coupler 10.

Coupler 10 includes first end 14, second end 16, stop edge 18 and sealing system 20. Coupler 10 is generally cylindrical or oval shaped and defines a pipe section insertion direction along a central axis A to receive a pipe section through first end 14. In other embodiments (e.g., where the pipe is a different shape), coupler 10 could have another general shape (e.g., square or triangular).

Sealing system 20 is generally located between first end 14 of coupler and stop edge 18, and is typically located closer to the first end 14 than stop edge 18, though can vary depending on coupler requirements. Sealing system 20 is formed of a flexible material, for example, TPE, TPV, TPO or rubber, which typically extends from an inside to an outside of coupler 10 at the location of sealing system 20. As can be seen in Fig. 1D, outer surface 23 of sealing system 20 is also offset, or set radially inward from the outer surface of the rest of coupler 10 (the generally rigid parts). This can be, for example, 0,1 to 10 mm, preferably 0,2 to 5 mm though can vary depending on the size of the coupler, materials used, etc.

Sealing system 20 comprises sealing lip 22 extending around the circumference of coupler 10, in this case the inner circumference (though could be the outer circumference in some embodiments), and can extend at an angle A (e.g., 15-75 degrees, see Fig. 1D) toward second end 16. Sealing lip 22 and sealing system 20 extend in a wave shape around at the circumference of coupler 10, meaning that the location of the sealing lip 22 varies along the insertion direction with respect to the first end 14 (or a plane of insertion perpendicular to axis A if first end 14 is not in a plane) over at least part of the sealing lip 22. As can be seen in Figs. 1B-1C, sealing lip 22 extends from a position about 6 mm from first end 14 at position SL_{T} (the top of the wave); and about 13 mm from first end 14 at position SL_{B} (the bottom of the wave). Thus, sealing lip 22 and sealing system 20 is symmetric along diameter D₁. These are examples only, and sealing lip and location could vary in other embodiments. In some embodiments, coupler 10 could include two or more sealing systems 20, located at varying distances along axis A between first end 14 and stop edge 18. Each could include a sealing lip and an at least partially wavy shape such as that shown in sealing system 20 of Figs. 1A-1D.

The wave shape can be repetitive, sinusoidal, sawtooth, square or any other suitable shape, with a wave length (the length of the wave before it repeats) equal to 1-1/10 of the circumference (meaning the wave would repeat 0 to 10 times), preferably 1-1/5 of the circumference, more preferably 1-1/3 or 1-1/2 of the circumference. In coupler 10 shown in Figs. 1A-1D, the wave length is about ½ of the circumference and extends over the entire circumference, meaning that the wave repeats once (i.e., has two wave lengths) as it goes around the circumference. However, other embodiments could have a more repetitive wave. Sealing system 20 and/or sealing lip 22 can in some embodiments be rotationally symmetric, for example, being 90 or 180 degrees rotationally symmetric.

Stop edge 18 includes lip 24 extending radially inward around the inner circumference of coupler 10 between second end 16 and sealing system 20. Lip 24 is generally rigid and annular, and formed of the same generally rigid material as the inner circumference of coupler 10 (outside of sealing system 20), for example a plastic material such as polypropylene ("PP") or a metal. On a top side of rigid lip 24 is wavy layer 26. Wavy layer 26 is formed of flexible material (e.g., TPE), generally the same material as sealing system 20. Wavy layer 26 is connected, for example, bonded or moulded to lip 24 on a lower surface. The upper surface of layer 26 is where the wave is located. The wave in layer 26 is generally a sinusoidal wave or can have any other shape or property, with a wave length equal to or different from the wave of sealing system 20 and lip 22. The wavy surface of layer 26 can extend through its length radially or could vary in the radial direction.

As seen in Fig. 1B, with the exception of sealing system 20 and wavy layer 26, the inner surface of coupler 10 is formed of rigid material (e.g., PP). Some outer portions can have flexible material over the rigid portion, but this is typically for aesthetic purposes and the rigid material forming most of the length of coupler 10 gives coupler 10 strength and stability for insertion, coupling and sealing.

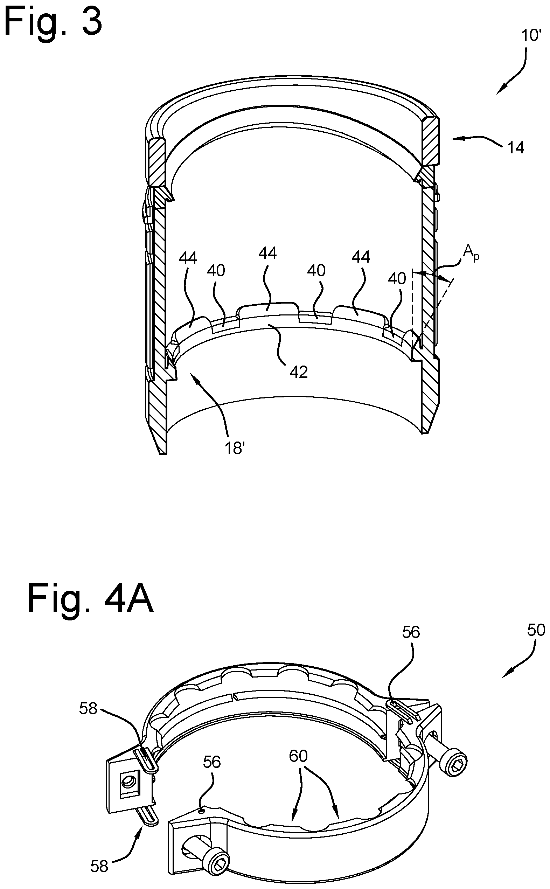

Figure 3 shows a further embodiment of a coupler 10' with a stop edge 18' with a different configuration. Thus, only the differences will be discussed. Stop edge 18' comprises interrupted lip 40, flexible layer 42 and protrusions 44. Lip 40 is made of rigid material extending radially inward from inner circumference. Lip 40 is interrupted by protrusions 44 formed of flexible material and extending axially toward first end 14 above and closer to first end 14 than lip 40. This could be, for example 1-5 mm above lip 40, preferably 2,5 - 3,5 mm above lip 40 toward first end 14. Any number of protrusions could be used around the inner circumference of coupler 10', for example, 3-25, preferably 4-15, more preferably 5-10. Protrusions can include an angle A_{P} on an upper surface, for example, between 0-85 degrees from vertical, preferably 15-75 degrees, more preferably 45 degrees. Such an angle can help to fit a chamfered pipe and provide a receiving surface for the end of pipe which does not allow connection to the rigid portions of pipe (thus reducing vibrations and sound). Before the angled surface, the edges or inner surfaces of flexible layer 42, interrupted lip 40 and protrusions 44 typically align and extend parallel to the inner surface of coupler 10'. Flexible layer 42 typically functions as a flow channel to form protrusions 44.

Coupler 10, 10' is typically formed of a two-step injection moulding process, with a first moulding step to form the substantially rigid (e.g., PP) parts of coupler 10. The second step is to overmould the flexible parts, sealing system 20, layer 26 or layer 42 with protrusions 44, and any outer layers. Thus, coupler 10 is formed integrally as one part, making coupler 10, 10' strong and stable despite the use of different materials and no direct reinforcement of sealing system 20 area with more rigid material.

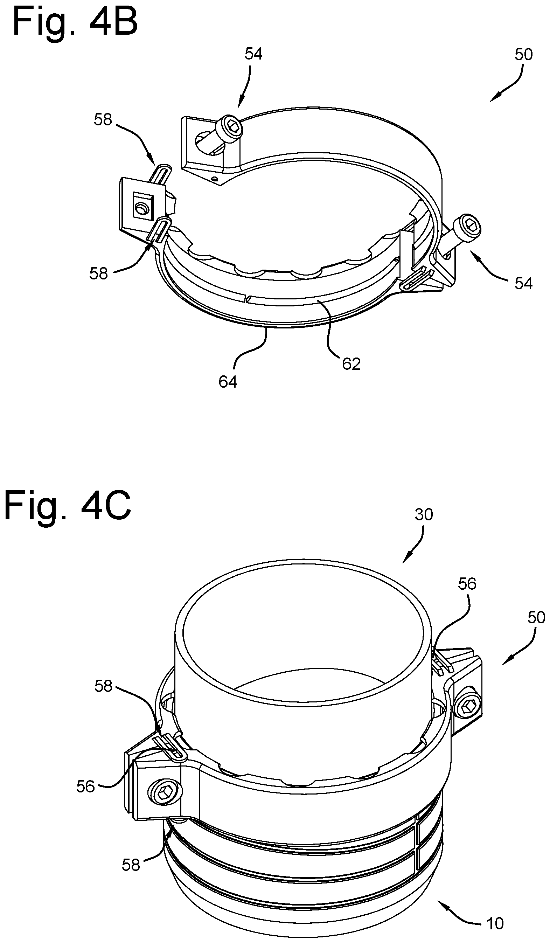

FIG. 4A shows a top perspective view of a clamp 50 for use with a coupler; FIG. 4B shows a bottom perspective view of the clamp 50 and FIG. 4C shows the clamp in use with a pipe 30 and coupler 10.

Clamp 50 is formed of two halves 52a, 52b, which connect together at their ends. The halves can be the same, symmetric or could be different (complementary). In the embodiment shown, the connections are with screws 54, pins 56 and channels 58, with each half being the same (making for easier manufacture and assembly). Channels fit around pins 56 to guide the halves 52a, 52b of clamp 50 together tightly to clamp over an end of coupler 10, 10' (see Fig. 4C). Clamp includes teeth 60 extending radially inward from one side of clamp 50; an interrupted lip 62 and an lower edge 64. As shown in FIG. 4C, clamp 50 fits around coupler 10, 10' and pipe 30 when pipe is inserted into coupler 10. Clamp 50 secures halves 52a, 52b through pins 56 connecting inside channels 58 and screws 54 tightening halves 52a, 52b to each other as well as to coupler 10, 10' and pipe 30. Teeth 60 connect to pipe 30 to secure pipe 30 to coupler 10, 10' and reduce any axial movement to ensure pipe 30 does not slide out of coupler 10, 10'. Interrupted lip 62 can connect to outside of coupler 10, 10', and in some embodiments can follow the wavy design of sealing system and/or sealing lip. Thus, interrupted lip can help to ensure that sealing lip 22 stays connected to pipe 30 to prevent any leakage. The interruptions can help to avoid the squeezing and deforming of flexible material in an unintended way by the clamp therefore reducing the possibility that the flexible material is damaged, particularly at the ends of each half 52a, 52b, where they come together.

Lower edge 64 can fit around coupler 10, 10', in some cases aligning with an edge and/or a groove of outer material for axial gripping and stability. In some cases, this groove could be especially deep (e.g., extend further for gripping purposes. Thus, clamp 50 can be used as a simple way to allow the connection to bear higher pressure loads with lower risk of separation and/or leakage between the pipe 30 and coupler 10, 10'.

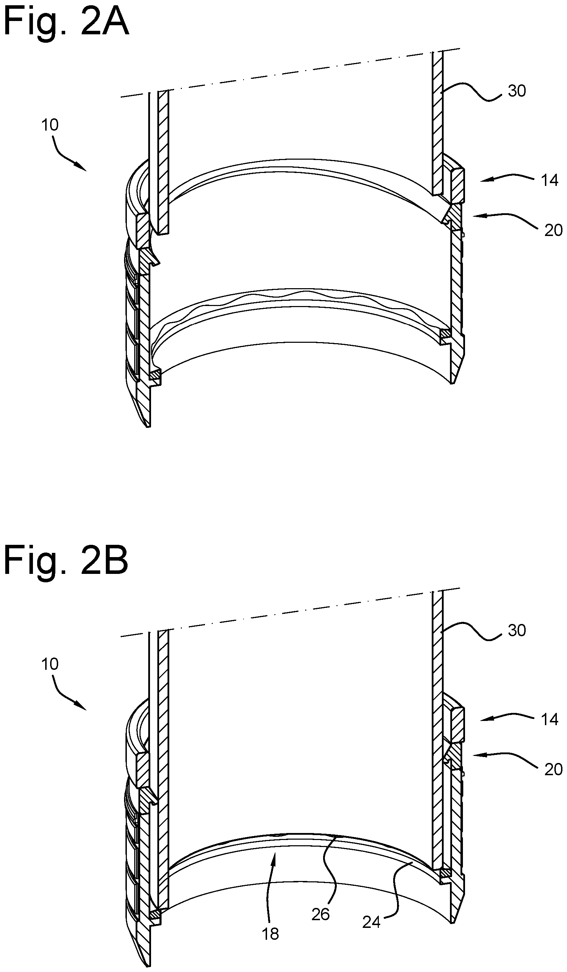

In use, as shown in Fig. 2A, a pipe 30 is inserted into first end 14 of coupler 10, 10'. The shape of sealing lip 22 (not in a single plane or cross-section of coupler 10, 10') allows for pipe 30 to encounter only part of sealing lip 22 at a time as pipe moves through the insertion direction further into coupler 10, 10'. Additionally, the flexible material allows sealing system 20 to expand as pipe is pushed through sealing system 20, thus allowing for a reduction of insertion or extraction forces. Fig. 2B shows pipe 30 being fully inserted, with end 32 of pipe 30 connecting to wavy layer 26 of stop edge 18. If pipe 30 were inserted into coupler 10' of Fig. 3, end 32 would connect to protrusions 44 and not contact interrupted lip 40. In some embodiments, clamp 50 can then be connected around pipe 30 and coupler 10, 10', as shown in Fig. 4C.

Such a configuration of pipe and coupler provides a strong and fluid tight connection with lessened insertion and/or extraction forces required and can also reduce or eliminate any need to lubricate or chamfer pipe 30 end before insertion. Thus, this results in a much faster and more flexible installation, and results in less waste on-site as the need for lubrication and/or chamfering can be reduced or eliminated with such a configuration. Additionally, the wavy geometry of sealing lip 22 and sealing system 20 overall helps to ensure that the seal is not moved or pushed out even if the end of pipe 30 is not cut properly or chamfered in the correct way. Further, by setting the outer surface of sealing system inward from the outer rigid surface, flexible sealing system 20 is protected against damage from falling or improper handling (e.g., dropping or dragging the coupler and pipe on the ground) before or during installation. Wavy layer 26 or protrusions 44 formed of flexible material (on top of rigid lip layer 24 or extending further towards the first end than lip 40) provides a stop edge 18 which pipe 30 cannot move past for proper insertion depth while reducing transmission of vibrations in the piping system and therefore creating a sound absorption buffer with the pipe 30 end 32 connecting to flexible material only. Thus, the configuration results in overall more effective sound reduction and also allows for eliminating any need for expansion gaps, thereby providing a more simple and smooth installation process which can bear higher loads (particularly when used in combination with a mechanical clamp).

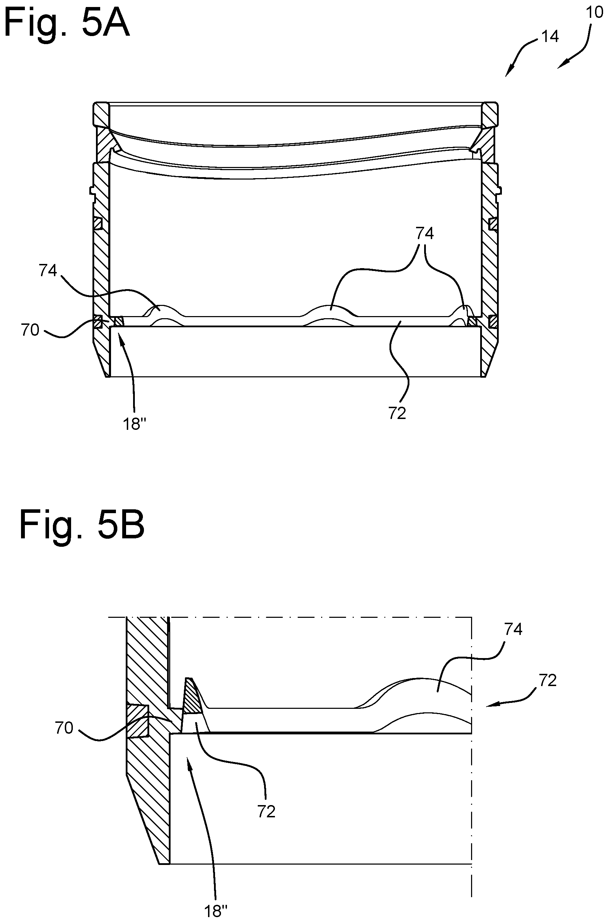

FIG. 5A shows a cross-sectional view of a further embodiment of a coupler with stop edge, and FIG. 5B shows a close-up portion of Fig. 5A. Only the stop edge differs 18" from the couplers shown in Figs. 1A-3, and thus only that part will be discussed.

Stop edge 18" is formed of a lip 70 and flexible portion 72 with protrusions (or waves) 74. Lip 70 is made of rigid material extending radially inward from inner circumference all the way around the inner circumference. Lip 70 extends a distance inward such that the pipe to be inserted could not move past lip 70. This could be, for example, 1-6 mm, or other distances depending on the pipe size coupler 10 is made for. Stop edge 18" is typically formed such that an inner diameter of a pipe which coupler is for use with corresponds to the inner diameter of the flexible portion 72. The outer diameter of the pipe is larger than the inner diameter of the lip 70, so the pipe can never pass through.

Flexible portion 72 extends from the inner circumference of lip 70, and does not overlap rigid lip 70 in the radial direction. Parts of flexible portion 72 not having protrusions 74, can be about the same height as lip 70. Protrusions 74 form a receiving surface for a pipe, being the first part of stop edge 18" that a pipe will contact when being inserted. Protrusions 74 can be spaced around flexible portion 72 as shown, with flexible portion protruding upwards toward coupler 10 first end 14 and closer to first end 14 than lip 70. This could be, for example 1-5 mm above lip 70, preferably 2,5 - 3,5 mm above lip 70 toward first end 14. Any number of protrusions could be used around the inner circumference of coupler 10, for example, 3-25, preferably 4-15, more preferably 5-10. Protrusions can include an angle on an upper surface, for example, between 0-85 degrees from vertical, preferably 15-75 degrees, more preferably 45 degrees similar to that as described with respect to Fig. 3. Such an angle can help to fit a chamfered pipe and provide a receiving surface for the end of pipe which does not allow connection to the rigid portions of pipe (thus reducing vibrations and sound). In this embodiment, there is then no flexible portion 72 directly radially inward at protrusions 74, but that could differ in other embodiments.

Coupler 10 is typically formed of a two-step injection moulding process, with a first moulding step to form the substantially rigid (e.g., PP) parts of coupler 10, including lip 70. The second step is to mould the flexible parts, including flexible portion 72. Thus, coupler 10 is formed integrally as one part, making coupler 10 strong and stable despite the use of different materials.

Forming stop edge 18" as shown and described with respect to Figs. 5A-5B results in a simple but strong stop edge 18" which can receive a pipe on protrusions 74, therefore generally preventing contact with rigid lip 70 any resulting vibrations or noise. However, keeping a part of stop edge 18" rigid ensures that a pipe cannot pass by the stop edge 18", even if the force were enough to move beyond flexible portion 72. This embodiment also keeps stop edge 18" in a compact form, making manufacture simple.

While the term "pipe" is used generally, this can indicate a pipe, a fitting, a pipe and fitting together and/or a spigot end of a pipe. While the sealing lip is shown in the example embodiments to be at an inside of the coupler, in other embodiments, the sealing lip could be on an outside of the pipe or coupler. In such a system, the sealing lip would connect to the flexible sealing system and function in the same manner to provide a sealing connection between the pipe and coupler while allowing for lower insertion and extraction forces.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. Coupler comprising:
- a first end for receiving a pipe section and a second end, and
- a stop edge extending radially inward from an inner circumference of the coupler, wherein the stop edge comprises a rigid portion and a flexible portion adjacent to the rigid portion, the flexible portion forming a receiving surface for a pipe end.

2. The coupler according to claim 1, wherein the rigid portion comprises a lip extending radially around the inner circumference.

3. The coupler according to any of the preceding claims, wherein the flexible portion comprises a plurality of protrusions forming the receiving surface.

4. The coupler according to claim 3, wherein the receiving surface on each of the plurality of protrusions is at an angle, preferably between 15 and 75 degrees from vertical, more preferably about 35-55 degrees, most preferably about 45 degrees.

5. The coupler according to any of claims 3-4, wherein the protrusions extend about 2,5-3,5 mm closer to the first end than the interrupted lip.

6. The coupler according to any of the preceding claims, wherein the flexible portion extends from the inner circumference of the rigid portion.

7. The coupler according to any of claims 3-6, wherein the plurality of protrusions is 3-30 protrusions.

8. The coupler according to any of claims 3-7, wherein an edge of at least part of the flexible portion aligns with an edge of the rigid portion.

9. The coupler according to any of the preceding claims, wherein the flexible portion is bonded or moulded the rigid portion.

10. The coupler according to any of the preceding claims, wherein the flexible portion comprises a thermoplastic elastomer.

11. The coupler according to any of the preceding claims, wherein the rigid portion comprises a plastic or metal material.

12. The coupler according to claim 1, wherein the flexible portion receiving surface comprises a wavy shape with one or more waves extending around the inner circumference of the coupler

13. The coupler according to any of the preceding claims, wherein the coupler defines a pipe section insertion direction along a central axis, and wherein the flexible portion extends axially along the insertion direction such that the distance between the first end and the flexible portion at the receiving surface is less than the distance between the first end and the rigid portion.

14. The coupler according to any of the preceding claims, wherein the flexible portion extends from an inner surface of the rigid portion.

15. The coupler according to any of the preceding claims, wherein the flexible portion and the rigid portion do not overlap in the radial direction.

16. The coupler according to any preceding claim, and further comprising a sealing system comprising a sealing lip extending radially from the circumference of the coupler between the stop edge and the first end, wherein the sealing system is formed of a flexible material extending around the entire circumference from an inside to an outside of the coupler, and wherein the sealing system extends in a non-annular and/or wavy shape around the coupler.

17. The coupler according to any of the preceding claims, and further comprising a pipe with a first end extending inside the coupler and connected to the flexible portion of the stop edge.

18. A method of manufacturing a coupler, the method comprising:
injection moulding a rigid part with a first end for receiving a pipe section, a second end and a stop edge extending radially inward around the inner circumference of the coupler, the rigid part formed of a rigid material; and
rmoulding flexible material, the flexible material comprising a receiving surface for a pipe end.

19. The method of claim 18, wherein the step of overmoulding further comprises:
forming the receiving surface as protrusions extending from the flexible material toward the first end.
